# EUROPÄISCHE PATENTSCHRIFT

(11) **EP 1 566 294 B1**
(45) Veröffentlichungstag und Bekanntmachung des Hinweises auf die Patenterteilung: **02.05.2007**
(21) Anmeldenummer: 04027828.5
(22) Anmeldetag: 24.11.2004
(51) Int. Cl.: B60H 1/34, B60H 1/00

(54) **Vorrichtung zur Luftverteilung**
Air distribution device
Dispositif de distribution d'air

(30) Priorität: 19.02.2004 DE 202004002552 U
(43) Veröffentlichungstag der Anmeldung: 24.08.2005
(73) Patentinhaber: HAPPICH Fahrzeug- und Industrieteile GmbH, 42285 Wuppertal (DE)
(72) Erfinder: Celik, Fahri, 42283 Wuppertal (DE)

(56) Entgegenhaltungen:
- EP-A- 0 545 035
- EP-A- 0 703 105
- EP-A- 0 744 308

## Beschreibung

Die Erfindung bezieht sich auf eine Vorrichtung zur Luftverteilung für den Einsatz in Großraumfahrzeugen, wie z. B. Omnibussen, die an einen Luftkanal dieses Fahrzeuges anschließbar ist, und wenigstens einen ersten öffenbaren und verschließbaren Luftdurchlass zur individuell einstellbaren Belüftung und wenigstens einen zweiten öffenbaren und verschließbaren Luftdurchlass zur Permanent- bzw. Grundbelüftung des Fahrzeuges aufweist, wobei durch Öffnen des wenigstens einen ersten Luftdurchlasses der wenigstens eine zweite Luftdurchlass schließbar und durch Schließen des ersten Luftdurchlasses der zweite Luftdurchlass öffenbar ist, wobei die den wenigstens einen ersten Luftdurchlass und die den wenigstens einen zweiten Luftdurchlass umfassende Vorrichtung zur Luftverteilung einen in bezug auf seine Längsachse rotierbar an jeweils einem Halter gelagerten, im wesentlichen länglichen Luftaustrittskörper umfasst, wobei dieser Luftaustrittskörper in einer ersten Rotationsstellung zur individuellen Belüftung und in einer zweiten Rotationsstellung zur Permanent- bzw. Grundbelüftung ausgebildet ist und der längliche Luftaustrittskörper einen zur individuellen Belüftung auf den Fahrgast richtbaren ersten Luftdurchlass und einen im wesentlichen diffusen Luftstrom erzeugenden zweiten Luftdurchlass umfasst.

Aus dem Stand der Technik sind verschiedene Vorrichtungen zur Luftverteilung für den Einsatz in Großraumfahrzeugen wie z. B. in Omnibussen bekannt. Es sind dabei zum einen solche Vorrichtungen zur Luftverteilung bekannt, bei denen die Einrichtungen zur individuell einstellbaren Belüftung und zur Permanent- bzw. Grundbelüftung durch separat ausgebildete Bauteile wie Lüfterdüsen oder Lüftungsschlitze verwirklicht werden. Zum anderen ist es z. B. aus der DE 39 33 650 A1 bekannt, einen ersten öffenbaren und verschließbaren Luftdurchlass zur individuell einstellbaren Belüftung und einen zweiten öffenbaren und verschließbaren Luftdurchlass zur Permanent- bzw. Grundbelüftung eines Fahrzeuges in einem Bauteil zu kombinieren, in diesem Fall ist dabei vorgesehen, dass durch Öffnen des ersten Luftdurchlasses der zweiten Luftdurchlass schließbar und dass durch Schließen des ersten Luftdurchlasses der zweite Luftdurchlass öffenbar ist. Es soll durch diese Ausgestaltung insbesondere die Belüftungsqualität gegenüber den zuvor bekannten Lösungen wesentlich verbessert werden, wobei die zur Belüftung zur Verfügung stehende Luft gewünschtenfalls ausschließlich zur individuell einstellbaren Belüftung oder auch ausschließlich zur Permanent- bzw. Grundbelüftung herangezogen werden kann.

Es ist dabei bei einer bevorzugten Ausführungsform der Vorrichtung zur Luftverteilung vorgesehen, dass diese aus einem Luftverteiler besteht, der aus einer Haube, einem darin eingesetzten Gehäuse und vom Gehäuse getragenen Stellmitteln zusammengesetzt ist, dass die Haube eine erste, mit dem Luftkanal in Verbindung stehende Öffnung und eine zweite, zur Aufnahme des Gehäuses dienende Öffnung aufweist, dass das Gehäuse mit den Luftdurchlässen, die einander beabstandet sind und mit einem rohrstutzenartigen Ansatz ausgebildet ist, dass der Ansatz, der sich mit seinem freien Ende am Randbereich der ersten Haubenöffnung abstützt, Wandungsöffnungen, durch die Luft zum zweiten Luftdurchlass strömen kann, und einen Boden mit Öffnungen, durch die Luft zum ersten Luftdurchlass strömen kann, aufweist, dass in dem Ansatz ein sich auf dem Boden abstützender Schließteller mit zylindrischem Rohransatz angeordnet ist, der sowohl im Tellerbereich als auch am Rohransatz Öffnungen aufweist, dass der Schließteller mit einem am Gehäuse gelagerten Stellrad verbunden ist, und dass der Schließteller durch Drehen des Stellrades wahlweise die Öffnungen im rohrstutzenartigen Ansatz oder im Boden desselben abzudecken bzw. freizugeben vermag. Eine solche Ausgestaltung soll sich gegenüber den zuvor bekannten Lösungen durch eine zuverlässige Funktionstüchtigkeit und durch einen geringen Fertigungsaufwand auszeichnen. Als verbesserungswürdig ist jedoch bei dieser Anordnung insbesondere der aus zu vielen Einzelteilen bestehende konstruktive Aufbau und der sich dadurch ergebende hohe Fertigungs- bzw. insbesondere auch der sehr hohe Montageaufwand anzusehen.

Weiterhin ist aus der EP-A-0 703 105 eine Anordnung bekannt, die sich auf eine Luftauslassgrille für eine Öffnung in einem Fahrzeug bezieht, und zwar insbesondere in einer Armaturentafel oder einer sonstigen Platte oder Raumelement eines Fahrzeugs. Die Luftauslassgrille umfasst dabei zwei Gruppen von feststehenden Lamellen, die den Luftstrom leiten sollen. Die erste Gruppe der feststehenden Lamellen ist dabei in Bezug auf die Längs- und auf die Querachse der Luftauslassgrille parallel sowie auch parallel untereinander angeordnet, um den Luftstrom nach vorne gerichtet ausströmen zu lassen. Die zweite Gruppe der feststehenden Lamellen ist parallel zu der Längsachse angeordnet, und nicht parallel zu der Querachse sowie nicht parallel untereinander, um den Luftstrom in einer diffusen Weise zu lenken, um dadurch ein direktes Anströmen des Luftstromes zu dem Fahrer oder anderer in dem Fahrzeug befindlichen Personen zu vermeiden. Mit einer derart ausgebildeten Luftauslassgrille soll insbesondere erreicht werden, dass diese einen gerichteten sowie diffusen Luftstrom bereit stellt, und trotzdem einfach herzustellen und dadurch kostengünstig ist sein soll. Als verbesserungswürdig ist auch bei dieser Anordnung insbesondere der aus zu vielen Einzelteilen bestehende konstruktive Aufbau und der sich dadurch ergebende hohe Fertigungs- bzw. Montageaufwand anzusehen.

Ausgehend von den bekannten Vorrichtungen zur Luftverteilung für den Einsatz in Großraumfahrzeugen liegt dem gemäß der vorliegenden Erfindung die Aufgabe zugrunde, die bekannten Anordnungen unter Beibehaltung der bisherigen Vorteile in der Weise zu verbessern bzw. weiterzuentwickeln, dass die zuvor erwähnten Nachteile der bekannten Vorrichtungen zur Luftverteilung vermieden werden, wobei insbesondere ein einfacher konstruktiver Aufbau mit wenigen Bauteilen erzielt werden soll, der einfach gefertigt und montiert werden kann. Es soll dabei außerdem das Kombinieren der Einrichtung zur individuell einstellbaren Belüftung und der Einrichtung zur Permanent- bzw. Grundbelüftung des Fahrzeugs in einem Bauteil vereinfacht bzw. verbessert werden.

Die Aufgabe wird erfindungsgemäß dadurch gelöst, dass der erste Luftdurchlass eine wesentlich kleinere Luftaustrittsfläche als der zweite Luftdurchlass besitzt und der erste Luftdurchlass im Luftaustrittskörper gegenüber dem zweiten Luftdurchlass angeordnet ist. Auf diese Weise wird erstmalig mit einfachen Mitteln die Möglichkeit geschaffen, eine Vorrichtung zur Luftverteilung mit einer Kombination einer individuell einstellbaren Belüftung und einer Permanent- bzw. Grundbelüftung bereitzustellen, die einen konstruktiv einfachen Aufbau mit wenigen Bauteilen aufweist und deshalb in einfacher Weise gefertigt und montiert werden kann. Die erfindungsgemäße Anordnung ist dabei nicht nur konstruktiv einfach aufgebaut und damit kostengünstig herstellbar, sondern sie ist auch einfach in der Handhabung und außerdem auch sicher und zuverlässig hinsichtlich ihrer sonstigen Funktionseigenschaften. Durch die Ausführung einer wesentlich kleineren Luftaustrittsfläche für den ersten Luftdurchlass wird dabei mit einfachen Mitteln eine für die individuell einstellbare Belüftung erforderliche erhöhte Luftströmungsgeschwindigkeit erreicht. Durch die Ausbildung des einen im wesentlichen diffusen Luftstrom erzeugenden, gegenüber dem ersten Luftdurchlass angeordneten zweiten Luftdurchlass wird außerdem mit einfachen Mitteln die für eine Permanent- bzw. Grundbelüftung des Fahrzeugs erforderliche niedrige Luftaustrittsgeschwindigkeit erzielt.

Nach einem weiteren Merkmal der vorliegenden Erfindung ist vorgesehen, dass der im wesentlichen eine kleine Luftaustrittsfläche umfassende Luftdurchlass in der zweiten Rotationsstellung zur Permanent- bzw. Grundbelüftung zum Fensterbereich des Fahrzeugs ausgerichtet anordenbar ist, dabei empfiehlt es sich weiterhin, dass der im wesentlichen eine große Luftaustrittsfläche umfassende Luftdurchlass in der zweiten Rotationsstellung zur Permanent- bzw. Grundbelüftung zum Mittelbereich des Fahrzeugs anordenbar ist. Auf diese Weise wird mit einfachen Mitteln erreicht, dass in der zweiten Rotationsstellung zur Permanent- bzw. Grundbelüftung zum Fensterbereich des Fahrzeugs ein stärkerer Luftstrahl zugeführt wird, als zum Mittelbereich des Fahrzeugs.

Nach einem weiteren bevorzugten Ausgestaltungsmerkmal der vorliegenden Erfindung ist vorgesehen, dass der im wesentlichen längliche Luftaustrittskörper im wesentlichen zweiteilig ausgebildet ist, mit einem rotierbar an jeweils einem Halter anbringbaren Lamellen-Gehäuseelement und einem in dieses einsetzbaren Lamellenträger. Es ist dies eine in konstruktiver und funktioneller Hinsicht besonders vorteilhafte Lösung. Es empfiehlt sich dabei, dass die Lamellen des im wesentlichen länglichen Luftaustrittskörpers feststehend ausgebildet sind, weiterhin ist es vorteilhaft, wenn diese Lamellen des im wesentlichen länglichen Luftaustrittskörpers schräg zu diesem verlaufend ausgerichtet sind.

Nach einem weiteren Ausgestaltungsmerkmal der vorliegenden Erfindung ist vorgesehen, dass der Verstellwinkel des länglichen Luftaustrittskörpers zwischen der ersten Rotationsstellung zur individuellen Belüftung und der zweiten Rotationsstellung zur Permanent- bzw. Grundbelüftung etwa 35° beträgt. Es ist dies ein besonders vorteilhafter Verstellwinkel zur gleichzeitigen Realisierung der ersten Rotationsstellung zur individuellen Belüftung und der zweiten Rotationsstellung zur Permanent- bzw. Grundbelüftung.

Es empfiehlt sich nach einem weiteren Merkmal der vorliegenden Erfindung, dass als Halter für die rotierbare Lagerung des länglichen Luftaustrittskörpers an dessen Endbereichen anbringbare, in z. B. ein an einem Luftkanal angebrachtes Aluminiumprofil einsetzbare Klipselemente ausgebildet sind. Über derartige Klipselemente ist die erfindungsgemäße Vorrichtung zur Luftverteilung besonders einfach und zuverlässig montierbar. Dabei empfiehlt es sich nach einem letzten Merkmal der vorliegenden Erfindung, dass die Klipselemente zur rotierbaren Lagerung des länglichen Luftaustrittskörpers an der Lagerstelle mit Arretiermitteln versehen sind.

Die Erfindung ist in den Figuren der Zeichnung in einem Ausführungsbeispiel dargestellt. Es zeigen:
- Fig.1: eine schematische, perspektivische, explosionsartige Darstellung der erfindungemäßen Vorrichtung zur Luftverteilung,
- Fig. 2: eine schematische Draufsicht auf die zusammengesetzte erfindungsgemäße Vorrichtung zur Luftverteilung,
- Fig. 3: eine Querschnittsansicht durch die erfindungsgemäße Vorrichtung zur Luftverteilung gemäß der Linie A - A der Fig. 2 in der ersten Rotationsstellung zur individuellen Belüftung mit gestrichelt angedeutetem Aluminiumprofil,
- Fig. 4: eine Unteransicht der erfindungsgemäßen Vorrichtung zur Luftverteilung entlang der Linie B - B der Fig. 3,
- Fig. 5: eine weitere Schnittansicht der erfindungsgemäßen Vorrichtung zur Luftverteilung gemäß der Linie C - C der Fig. 4 in der zweiten Rotationsstellung zur Permanent- bzw. Grundbelüftung mit gestrichelt angedeutetem Aluminiumprofil.

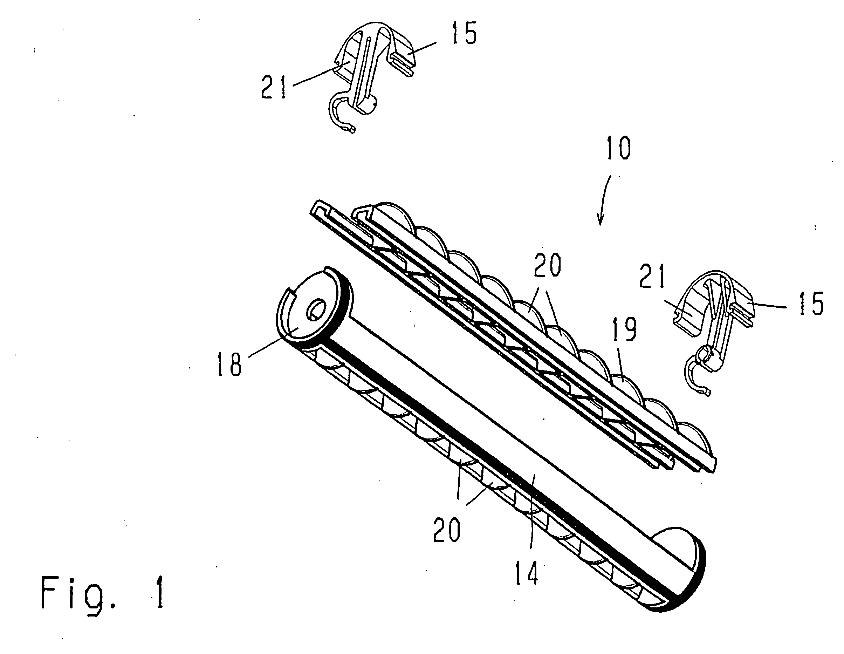

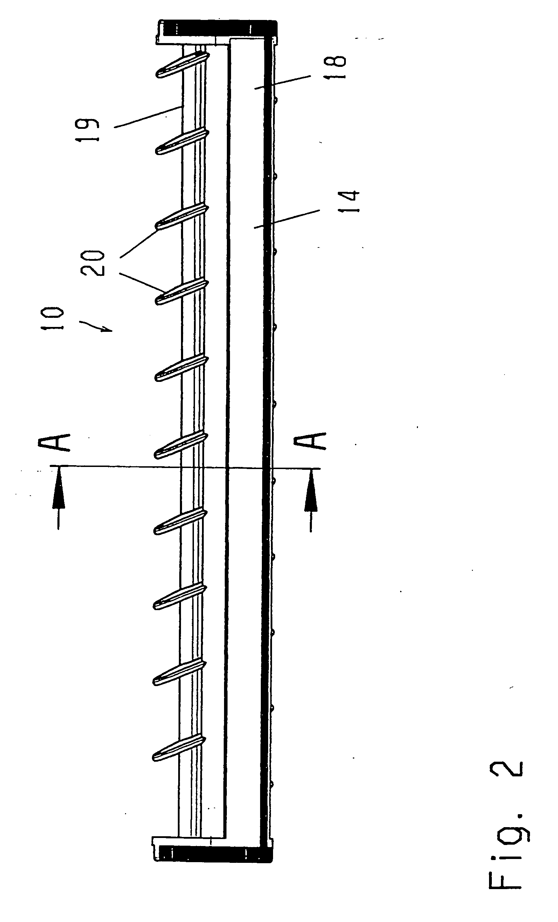

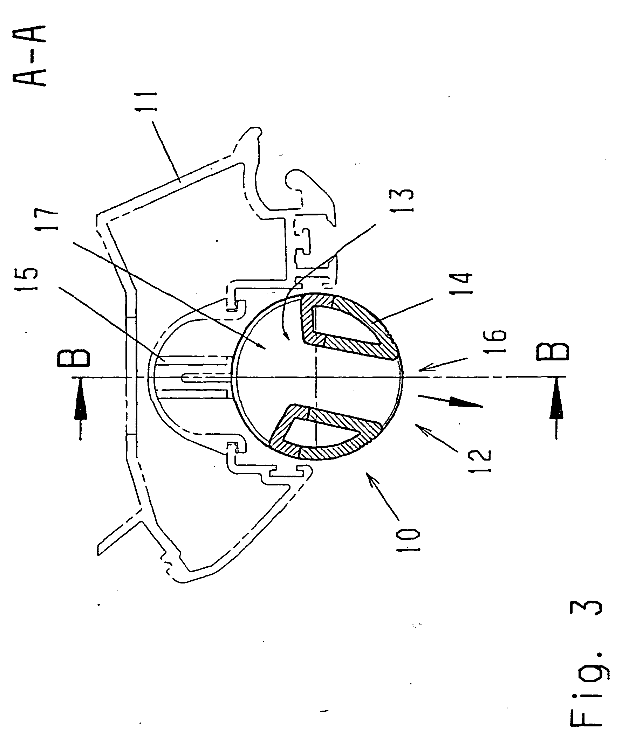

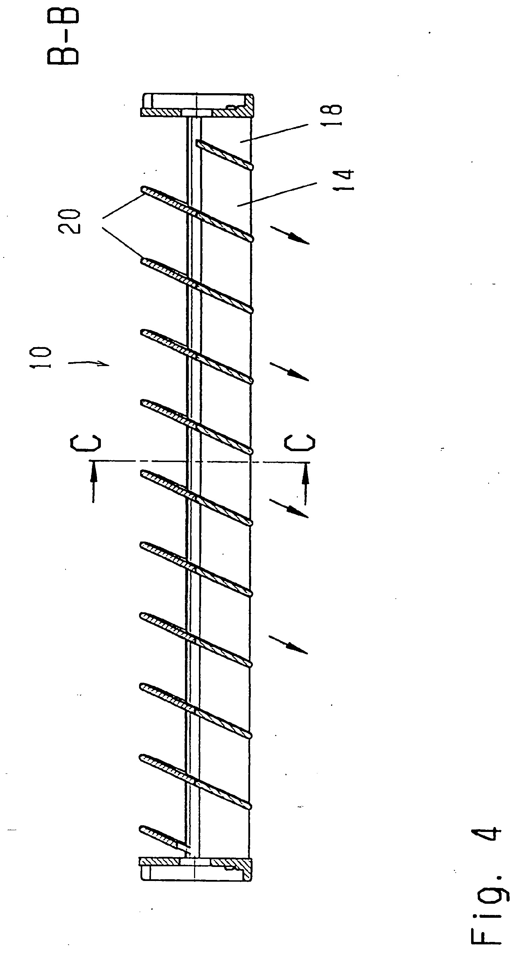

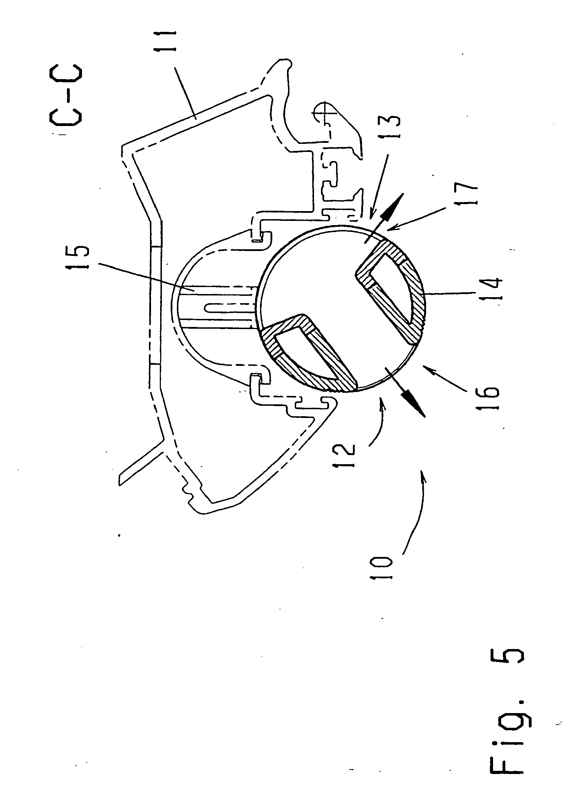

Die erfindungsgemäße Vorrichtung zur Luftverteilung ist generell mit 10 bezeichnet. Die Vorrichtung zur Luftverteilung 10 ist dabei vorgesehen für den Einsatz in Großraumfahrzeugen wie Straßen- und Schienenfahrzeugen wie z. B. in Omnibussen. Die erfindungsgemäße Vorrichtung zur Luftverteilung 10 ist dabei beispielsweise über ein in den Figuren 3 und 5 der Zeichnung schematisch angedeutetes, mit 11 bezeichnetes Aluminiumprofil an einen in den Figuren der Zeichnung nicht dargestellten Luftkanal eines Fahrzeuges anschließbar. Die erfindungsgemäße Vorrichtung zur Luftverteilung 10 ist in den Figuren der Zeichnung in der Fig. 1 in einem perspektivischen explosionsartigen Zustand und in den Figuren 2 und 4 der Zeichnung in zusammengesetztem Zustand dargestellt.

Die erfindungsgemäße Vorrichtung zur Luftverteilung 10 weist, siehe dazu insbesondere die Darstellungen gemäß den Figuren 3 und 5 der Zeichnung, wenigstens einen ersten öffenbaren und verschließbaren Luftdurchlass 12 zur individuell einstellbaren Belüftung und wenigstens einen zweiten öffenbaren und verschließbaren Luftdurchlass 13 zur Permanent- bzw. Grundbelüftung des Fahrzeugs auf. Es ist dabei, siehe wieder die genannten Figuren 3 und 5 der Zeichnung, durch Öffnen des wenigstens einen Luftdurchlasses 12, der wenigstens eine zweite Luftdurchlass 13 schließbar und durch Schließen des ersten Luftdurchlasses 12 der zweite Luftdurchlass 13 öffenbar.

Die erfindungsgemäße Vorrichtung zur Luftverteilung 10 zeichnet sich insbesondere dadurch aus, dass die den wenigsten einen ersten Luftdurchlass 12 und die den wenigstens einen zweiten Luftdurchlass 13 umfassende Vorrichtung zur Luftverteilung 10 einen in bezug auf seine nichtbezeichnete Längsachse rotierbar an jeweils einem mit 15 bezeichneten Halter gelagerten, im wesentlichen länglichen Luftaustrittskörper 14 umfasst, siehe dazu z. B. die explosionsartige Darstellung gemäß der Fig. 1 der Zeichnung, wobei dieser Luftaustrittskörper 14 in einer ersten Rotationsstellung zur individuellen Belüftung ausgebildet ist, siehe dazu die Fig. 3 der Zeichnung, und in einer zweiten Rotationsstellung zur Permanent- bzw. Grundbelüftung ausgebildet ist, siehe dazu die Fig. 5 der Zeichnung. Mit einer derart ausgebildeten Vorrichtung zur Luftverteilung 10 wird erstmalig eine Kombination einer individuell einstellbaren Belüftung und einer Permanent- bzw. Grundbelüftung des Fahrzeuges in einem Bauteil verwirklicht, die einen konstruktiv einfachen Aufbau mit wenigen Bauteilen umfasst und deshalb sehr montagefreundlich ist. Im Weiteren ist eine derart ausgebildete Vorrichtung zur Luftverteilung 10 auch einfach in der Handhabung und sicher und zuverlässig in ihren Funktionseigenschaften.

Bei der erfindungsgemäßen Vorrichtung zur Luftverteilung 10 umfasst der längliche Luftaustrittskörper 14 zur individuellen Belüftung einen ersten, auf den Fahrgast richtbaren Luftdurchlass 16 mit einer im wesentlichen kleinen Luftaustrittsfläche, siehe dazu insbesondere die Darstellung gemäß der Fig. 3 der Zeichnung. In diesem Fall ist also der Luftdurchlass 16 mit einer im wesentlichen kleinen Luftaustrittsfläche auf den Fahrgast gerichtet, so dass eine erhöhte Luftaustrittsgeschwindigkeit zur individuellen Belüftung gegeben ist. Weiterhin ist vorgesehen, siehe dazu die Darstellung gemäß der Fig. 5 der Zeichnung, dass der längliche Luftaustrittskörper 14 zur Permanent- bzw. Grundbelüftung neben dem im wesentlichen eine kleine Luftaustrittsfläche umfassenden Luftdurchlass 16 wenigstens einen zweiten, eine große Luftaustrittsfläche umfassenden Luftdurchlass 17 umfasst. Durch eine derartige Ausbildung wird eine für eine Permanent- bzw. Grundbelüftung des Fahrzeugs erforderliche niedrige Luftaustrittsgeschwindigkeit zur Verfügung gestellt, wobei bei der dargestellten Ausführungsform neben dem Luftdurchlass 17 mit einer großen Luftaustrittsfläche auch der andere Luftdurchlass 16 mit einer kleineren Luftaustrittsfläche zur Permanent- bzw. Grundbelüftung des Fahrzeugs beiträgt. Die Ausgestaltung ist dabei derart, dass der im wesentlichen eine kleine Luftaustrittsfläche umfassende erste Luftdurchlass 16 in dieser zweiten Rotationsstellung zur Permanent- bzw. Grundbelüftung zum Fensterbereich des Fahrzeugs ausgerichtet angeordnet ist, während der zweite im wesentlichen eine große Luftaustrittsfläche umfassende Luftdurchlass 17 in der zweiten Rotationsstellung zur Permanent- bzw. Grundbelüftung zum Mittelbereich des Fahrzeugs ausgerichtet angeordnet ist. Auf diese Weise wird erreicht, dass der zum Fensterbereich gerichtete Luftstrahl etwas stärker ist als der zum Mittelbereich des Fahrzeuges gerichtete Luftstrahl, wodurch eine besonders vorteilhafte Permanent- bzw. Grundbelüftung erreicht wird.

Bei dem dargestellten Ausführungsbeispiel ist der im wesentlichen längliche Luftaustrittskörper 14 im wesentlichen zweiteilig ausgebildet, siehe dazu insbesondere die explosionsartige Darstellung gemäß der Fig. 1 der Zeichnung, mit einem rotierbar an jeweils einem Halter 15 anbringbaren Lamellen-Gehäuseelement 18 und einem in dieses einsetzbaren Lamellenträger 19. Es ist dazu in der Fig. 1 der Zeichnung der erwähnte explosionsartig dargestellte nicht zusammengebaute Zustand dargestellt, während in den anderen Figuren der Zeichnung, siehe dazu insbesondere die Figuren 2 und 4, der zusammengesetzte Zustand der erfindungsgemäßen Vorrichtung zur Luftverteilung 10 dargestellt ist. Das Zusammensetzen der Einzelteile kann dabei in an sich bekannter Weise wie z. B. Klipsen, Ultraschallschweißen oder dgl. erfolgen. Die Lamellen 20 des im wesentlichen länglichen Luftaustrittskörpers 14 sind dabei feststehend ausgebildet, weiterhin sind diese Lamellen 20 des im wesentlichen länglichen Luftaustrittskörpers 14 schräg zu diesem verlaufend ausgerichtet. Durch eine derartige Ausgestaltung ergeben sich sowohl bei der individuellen Belüftung als auch bei der Permanent- bzw. Grundbelüftung des Fahrzeuges günstige Luftströmungseigenschaften.

Der Verstellwinkel des länglichen Luftaustrittskörpers 14 zwischen der ersten Rotationsstellung zur individuellen Belüftung und der zweiten Rotationsstellung zur Permanent- bzw. Grundbelüftung beträgt bei dem dargestellten Ausführungsbeispiel etwa 35°, siehe dazu die Fig. 3 der Zeichnung mit der ersten Rotationsstellung zur individuellen Belüftung in Verbindung mit der Fig. 5 der Zeichnung mit der zweiten Rotationsstellung zur Permanent- bzw. Grundbelüftung. Durch einen derart gewählten Verstellwinkel ergeben sich in beiden Rotationsstellungen besonders vorteilhafte Strömungseigenschaften.

Als jeweilige Halter 15 für die rotierbare Lagerung des länglichen Luftaustrittskörpers 14 sind, siehe dazu insbesondere die Fig. 1 der Zeichnung, an dessen Endbereichen anbringbare, in z. B. ein an einen Luftkanal angebrachtes Aluminiumprofil 11 einsetzbare Klipselemente 21 ausgebildet, siehe dazu auch die Darstellungen gemäß den Figuren 3 und 5 der Zeichnung. Es lässt sich über diese Klipselemente 21 die erfindungsgemäße Vorrichtung zur Luftverteilung 10 in besonders einfacher Weise an dem genannten Aluminiumprofil 11 anbringen, das wie erwähnt an einem in den Figuren der Zeichnung nicht dargestellten Luftkanal anschließbar ist. In bevorzugter Ausgestaltung sind dabei diese Klipselemente 21 zur rotierbaren Lagerung des länglichen Luftaustrittskörpers 14 an der in üblicher Weise als Zapfen-Bohrung-Verbindung ausgeführten Lagerstelle mit in der Fig. 1 der Zeichnung schematisch angedeuteten, nicht bezeichneten Arretiermitteln versehen sein, es können dabei diese Arretiermittel beispielsweise als Nippel oder dgl. ausgeführt sein. Es erfolgt dabei bei der erfindungsgemäßen Vorrichtung zur Luftverteilung 10 die Verstellung des länglichen Luftaustrittskörpers 14 zwischen der ersten Rotationsstellung zur individuellen Belüftung gemäß der Fig. 3 und der zweiten Rotationsstellung zur Permanent- bzw. Grundbelüftung gemäß der Fig. 5 durch eine Verdrehung des gesamten länglichen Luftaustrittskörpers 14 um den gesamten Verstellwinkel, der in dem vorliegenden Ausführungsbeispiel wie erwähnt 35° beträgt.

Mit der erfindungsgemäßen Vorrichtung zur Luftverteilung 10 wird erstmalig eine Kombination zur individuell einstellbaren Belüftung mit einer Permanent- bzw. Grundbelüftung eines Fahrzeugs geschaffen, die konstruktiv einfach mit wenigen Bauteilen aufgebaut und deshalb montagefreundlich ausgeführt ist. Darüber hinaus ist die erfindungsgemäße Anordnung auch einfach in der Handhabung, da wie erwähnt eine Verstellung des länglichen Luftaustrittskörpers 14 durch eine einfache Verdrehung desselben um den gesamten Verstellwinkel erfolgen kann, weiterhin ist die erfindungsgemäße Anordnung auch sicher und zuverlässig in ihren Funktionseigenschaften.

Wie bereits erwähnt, ist die dargestellte Ausführungsform nur eine beispielweise Verwirklichung der Erfindung. Diese ist nicht darauf beschränkt, es sind vielmehr noch mancherlei Abänderungen und Ausbildungen möglich. So sind insbesondere Abwandlungen des dargestellten länglichen Luftaustrittskörpers 14 sowie von dessen Lamellen-Gehäuseelement 18, des in diesen einsetzbaren Lamellenträgers 19 sowie auch der Lamellen 20 und deren Anordnung denkbar, weiterhin denkbar sind Abwandlungen in der Ausführung der den im wesentlichen länglichen Luftaustrittskörper 14 jeweils rotierbar lagernden Halter 15. Weiterhin denkbar ist selbstverständlich eine Verwendung bei anderen als den in den Figuren der Zeichnung dargestellten Aluminiumprofilen 11.

### Bezugszeichenliste:

- 10: Vorrichtung zur Luftverteilung
- 1: Aluminiumprofil (an Luftkanal)
- 12: erster Luftdurchlass (zur individuellen Belüftung)
- 13: zweiter Luftdurchlass (zur Permanent- bzw. Grundbelüftung)
- 14: länglicher Luftaustrittskörper
- 15: Halter (für 14)
- 16: Luftdurchlass (kleine Luftaustrittsfläche)
- 17: Luftdurchlass (große Luftaustrittsfläche)
- 18: Lamellen-Gehäuseelement
- 19: Lamellenträger
- 20: Lamelle
- 21: Klipselement (zur Lagerung von 14, in 11 einsetzbar)

## Patentansprüche

1. Vorrichtung zur Luftverteilung (10) für den Einsatz in Großraumfahrzeugen, wie z. B. Omnibussen, die an einen Luftkanal dieses Fahrzeuges anschließbar ist, und wenigstens einen ersten öffenbaren und verschließbaren Luftdurchlass (12) zur individuell einstellbaren Belüftung und wenigstens einen zweiten öffenbaren und verschließbaren Luftdurchlass (13) zur Permanent- bzw. Grundbelüftung des Fahrzeuges aufweist, wobei durch Öffnen des wenigstens einen ersten Luftdurchlasses (12) der wenigstens eine zweite Luftdurchlass (13) schließbar und durch Schließen des ersten Luftdurchlasses (12) der zweite Luftdurchlass (13) öffenbar ist, wobei die den wenigstens einen ersten Luftdurchlass (12) und die den wenigstens einen zweiten Luftdurchlass (13) umfassende Vorrichtung zur Luftverteilung (10) einen in bezug auf seine Längsachse rotierbar an jeweils einem Halter (15) gelagerten, im wesentlichen länglichen Luftaustrittskörper (14) umfasst, wobei dieser Luftaustrittskörper (14) in einer ersten Rotationsstellung zur individuellen Belüftung und in einer zweiten Rotationsstellung zur Permanent- bzw. Grundbelüftung ausgebildet ist und der längliche Luftaustrittskörper (14) einen zur individuellen Belüftung auf den Fahrgast richtbaren ersten Luftdurchlass (16) und einen im wesentlichen diffusen Luftstrom erzeugenden zweiten Luftdurchlass (17) umfasst,
**dadurch gekennzeichnet,**
**dass** der erste Luftdurchlass (16) eine wesentlich kleinere Luftaustrittsfläche als der zweite Luftdurchlass (17) besitzt und der erste Luftdurchlass (16) im Luftaustrittskörper gegenüber dem zweiten Luftdurchlass (17) angeordnet ist.

2. Vorrichtung zur Luftverteilung nach Anspruch 1, **dadurch gekennzeichnet, dass** der erste Luftdurchlass (16) in der zweiten Rotationsstellung zur Permanent- bzw. Grundbelüftung zum Fensterbereich des Fahrzeuges ausgerichtet anordenbar ist.

3. Vorrichtung zur Luftverteilung nach Anspruch 2, **dadurch gekennzeichnet, dass** der zweite Luftdurchlass (17) in der zweiten Rotationsstellung zur Permanent- bzw. Grundbelüftung zum Mittelbereich des Fahrzeuges ausgerichtet anordenbar ist.

4. Vorrichtung zur Luftverteilung nach einem der Ansprüche 1 bis 3, **dadurch gekennzeichnet, dass** der im wesentlichen längliche Luftaustrittskörper (14) im wesentlichen zweiteilig ausgebildet ist, mit einem rotierbar an jeweils einem Halter (15) anbringbaren Lamellen-Gehäuseelement (18) und einem in dieses einsetzbaren Lamellenträger (19).

5. Vorrichtung zur Luftverteilung nach Anspruch 4, **dadurch gekennzeichnet, dass** die Lamellen (20) des im wesentlichen länglichen Luftaustrittskörpers (14) feststehend ausgebildet sind.

6. Vorrichtung zur Luftverteilung nach Anspruch 5, **dadurch gekennzeichnet, dass** die Lamellen (20) des im wesentlichen länglichen Luftaustrittskörpers (14) schräg zu diesem verlaufend ausgerichtet sind.

7. Vorrichtung zur Luftverteilung nach einem der Ansprüche 1 bis 6, **dadurch gekennzeichnet, dass** der Verstellwinkel des länglichen Luftaustrittskörpers (14) zwischen der ersten Rotationsstellung zur individuellen Belüftung und der zweiten Rotationsstellung zur Permanent- bzw. Grundbelüftung etwa 35° beträgt.

8. Vorrichtung zur Luftverteilung nach einem der Ansprüche 1 bis 7, **dadurch gekennzeichnet, dass** als Halter (15) für die rotierbare Lagerung des länglichen Luftaustrittskörpers (14) an dessen Endbereichen anbringbare, in z. B. ein an einem Luftkanal angebrachtes Aluminiumprofil (11) einsetzbare Klipselemente (21) ausgebildet sind.

9. Vorrichtung zur Luftverteilung nach Anspruch 8, **dadurch gekennzeichnet, dass** die Klipselemente (21) zur rotierbaren Lagerung des länglichen Luftaustrittskörpers (14) an der Lagerstelle mit Arretiermitteln versehen sind.

## Claims

1. Air distribution device (10) for use in large capacity vehicles, such as for example buses, which may be connected to an air duct of said vehicle and comprises at least one first openable and closable air vent (12) for individual adjustable ventilation and at least one second openable and closable air vent (13) for permanent and/or background ventilation of the vehicle, by opening the at least one first air vent (12) the at least one second air vent (13) being able to be closed and by closing the first air vent (12) the second air vent (13) being able to be opened, the air distribution device (10) comprising the at least one first air vent (12) and the at least one second air vent (13) comprising a substantially elongate air outlet body (14) rotatably mounted on one respective holder (15) relative to the longitudinal axis thereof, said air outlet body (14) being configured in a first rotational position for individual ventilation and in a second rotational position for permanent and/or background ventilation and the elongate air outlet body (14) comprising a first air vent (16) which may be directed towards the passenger for individual ventilation and a second air vent (17) generating a substantially diffuse air flow, **characterized in that** the first air vent (16) has a substantially smaller air outlet surface than the second air vent (17) and the first air vent (16) is arranged in the air outlet body opposite the second air vent (17).

2. Air distribution device according to Claim 1, **characterized in that** the first air vent (16) may be arranged in the second rotational position aligned towards the window region of the vehicle for permanent and/or background ventilation.

3. Air distribution device according to Claim 2, **characterized in that** the second air vent (17) may be arranged aligned in the second rotational position towards the centre region of the vehicle for permanent and/or background ventilation.

4. Air distribution device according to one of Claims 1 to 3, **characterized in that** the substantially elongate air outlet body (14) is configured substantially in two parts, with a blade housing element (18) which may be rotatably attached to one respective holder (15) and a blade carrier (19) which may be inserted therein.

5. Air distribution device according to Claim 4, **characterized in that** the blades (20) of the substantially elongate air outlet body (14) are configured to be fixed.

6. Air distribution device according to Claim 5, **characterized in that** the blades (20) of the substantially elongate air outlet body (14) are aligned to extend obliquely thereto.

7. Air distribution device according to one of Claims 1 to 6, **characterized in that** the angle of adjustment of the elongate air outlet body (14) is approximately 35° between the first rotational position for individual ventilation and the second rotational position for permanent and/or background ventilation.

8. Air distribution device according to one of Claims 1 to 7, **characterized in that** clip elements (21) are configured as holders (15) which may be attached, for the rotatable mounting of the elongate air outlet body (14), to the end regions thereof and which may be inserted into, for example, an aluminium profile (11) attached to an air duct.

9. Air distribution device according to Claim 8, **characterized in that** the clip elements (21) are provided with locking means for rotatably mounting the elongate air outlet body (14) on the bearing point.

## Revendications

1. Dispositif de distribution d'air (10) destiné à être utilisé dans des véhicules de grande capacité, comme par exemple des omnibus, lequel peut être raccordé à un canal d'air dudit véhicule et présente au moins un premier passage d'air (12) capable d'être ouvert et fermé, destiné à la ventilation réglable individuellement, et au moins un second passage d'air (13) capable d'être ouvert et fermé, destiné à la ventilation permanente ou selon le cas de base du véhicule, au moins le second passage d'air (13) pouvant être fermé par ouverture d'au moins le premier passage d'air (12) et le second passage d'air (13) pouvant être ouvert par fermeture du premier passage d'air (12), le dispositif de distribution d'air (10) comportant au moins le premier passage d'air (12) et au moins le second passage d'air (13) présentant un corps de sortie d'air (14) de forme substantiellement allongée logé sur chaque fois un support (15) de façon à pouvoir tourner par rapport à son axe longitudinal, ledit corps de sortie d'air (14) étant conformé pour la ventilation individuelle dans une première position de rotation et pour la ventilation permanente ou selon le cas de base dans une seconde position de rotation et le corps de sortie d'air (14) de forme allongée comportant un premier passage d'air (16) pour la ventilation individuelle capable d'être dirigé vers le passager et un second passage d'air (17) générant un flux d'air substantiellement diffus, **caractérisé en ce que** le premier passage d'air (16) possède une surface de sortie d'air substantiellement plus petite que celle du second passage d'air (17) et **en ce que** le premier passage d'air (16) est disposé dans le corps de sortie d'air en face du second passage d'air (17).

2. Dispositif de distribution d'air selon la revendication 1, **caractérisé en ce que** le premier passage d'air (16) peut être disposé dans la seconde position de rotation pour la ventilation permanente ou selon le cas de base de façon orientée vers la zone de fenêtre du véhicule.

3. Dispositif de distribution d'air selon la revendication 2, **caractérisé en ce que** le second passage d'air (17) peut être disposé dans la seconde position de rotation pour la ventilation permanente ou selon le cas de base de façon orientée vers la zone médiane du véhicule.

4. Dispositif de distribution d'air selon l'une quelconque des revendications 1 à 3, **caractérisé en ce que** le corps de sortie d'air (14) de forme substantiellement allongée est conformé substantiellement en deux parties comportant un élément de boîtier à lamelles (18) capable d'être monté de façon à pouvoir tourner sur chaque fois un support (15) et un porte-lamelles (19) capable d'être inséré dans ledit élément de boîtier à lamelles (18).

5. Dispositif de distribution d'air selon la revendication 4, **caractérisé en ce que** les lamelles (20) du corps de sortie d'air (14) de forme substantiellement allongée sont conformées de façon fixe.

6. Dispositif de distribution d'air selon la revendication 5, **caractérisé en ce que** les lamelles (20) du corps de sortie d'air (14) de forme substantiellement allongée sont orientées de façon inclinée par rapport à celui-ci.

7. Dispositif de distribution d'air selon l'une quelconque des revendications 1 à 6, **caractérisé en ce que** l'angle de réglage du corps de sortie d'air (14) de forme allongée entre la première position de rotation pour la ventilation individuelle et la seconde position de rotation pour la ventilation permanente ou selon le cas de base est d'environ 35°.

8. Dispositif de distribution d'air selon l'une quelconque des revendications 1 à 7, **caractérisé en ce que** des éléments à clips (21) capables d'être insérés dans par exemple un profilé d'aluminium (11) installé sur un canal d'air, pouvant être montés dans la zone des extrémité du corps de sortie d'air (14), sont conformés en tant que supports (15) pour le logement capable de tourner du corps de sortie d'air (14) de forme allongée.

9. Dispositif de distribution d'air selon la revendication 8, **caractérisé en ce que** les éléments à clips (21) pour le logement capable de tourner du corps de sortie d'air (14) de forme allongée sont pourvus de moyens d'arrêt aux points d'appui.
